Europäisches Patentamt

European Patent Office

Office européen des brevets

(19)

(11) Veröffentlichungsnummer: **0 217 042 B1**

(12) **EUROPÄISCHE PATENTSCHRIFT**

(45) Veröffentlichungstag der Patentschrift: 24.04.91

(51) Int. Cl.[5]: **H04B 7/005**, H04B 7/08

(21) Anmeldenummer: 86110303.4

(22) Anmeldetag: 25.07.86

(54) **Nachrichtenübertragungssystem für elektromagnetische Wellen.**

(30) Priorität: 17.09.85 DE 3533156

(43) Veröffentlichungstag der Anmeldung:
08.04.87 Patentblatt 87/15

(45) Bekanntmachung des Hinweises auf die
Patenterteilung:
24.04.91 Patentblatt 91/17

(84) Benannte Vertragsstaaten:
AT DE IT

(56) Entgegenhaltungen:
EP-A- 0 176 029
US-A- 4 004 224

COMMUTATION ET TRANSMISSION, Band 6,
Nr. 3, September 1984, Seiten 65-82, Issy-
les-Moulineaux, FR; G. BONNEROT et al.:
"Systèmes hertziens 140 Mbit/s A 4 et 6 GHz
STN 65-140 - STN 36-140"

PATENTS ABSTRACTS OF JAPAN, Band 9,
Nr. 181 (E-331)[1904], 26. Juli 1985; & JP-A-60
52 132

(73) Patentinhaber: **Siemens Aktiengesellschaft
Wittelsbacherplatz 2
W-8000 München 2(DE)**

(72) Erfinder: **Vogel, Klaus, Dipl.-Ing.
Kranzlstrasse 15
W-8192 Geretsried-Gelting(DE)**

## Beschreibung

Die Erfindung bezieht sich auf ein NachrichtenübertragungsSystem für elektromagnetische Wellen, bestehend aus einem Sender, in dem das zu übertragende Signal einem Träger aufmoduliert wird, einer Sende- und einer Empfangsantenne mit dazwischenliegendem Funkfeld und einem Empfänger mit zugeordnetem Diversityempfänger, in dem das empfangene Signal in eine ZF-Ebene umgesetzt und demoduliert wird. Ein Diversity-Empfängersystem für ein solches Nachrichtenübertragungssystem ist aus den Patents Abstract of Japan, Band 9 Nr. 181 (E-331) (1904), 26. Juli 1985 bekannt.

Ferner ist aus der US-A-4 004 224 ein Richtfunknetz zur Übertragung digitaler Signale mit mindestens einem Netzknotenpunkt, an dem mehrere aus Sendern und Empfängern gebildete Richtfunkstrecken zusammentreffen, bekannt, bei dem die verschiedenen an einem Netzknotenpunkt zusammentreffenden Richtfunkstrecken in gleichem Frequenzband betrieben werden und die Sendeleistung im schwundfreien Zustand so eingestellt wird, daß der Nutzempfangspegel am dazugehörigen Empfänger um 10 bis 20 dB größer als der durch Empfängerrauschen und Gleichkanalstörer erzeugte Störempfangspegel ist und die Sendeleistung der Sender bei Auftreten von Schwund hochgeregelt wird. Dies erfolgt in der Weise, daß bei Absinken der Empfangsfeldstärke die Sendeleistung des fernen Senders mit einer Regelschleife über einen Hilfskanal vom Empfänger zum fernen Sender entsprechend hochgeregelt wird.

Auf Strecken ohne Zugriff zu Energieversorgungsnetzen werden Funksysteme z.B. durch Solaranlagen, Windgeneratoren oder auch Dieselgeneratoren versorgt. Hohe Anschaffungs- und Betriebskosten derartiger Anlagen machen dabei eine geringstmögliche Leistungsaufnahme der Funkgeräte erforderlich. Für analoge FM-Systeme und Digitalsysteme bis 34 MBit/s läßt sich mit üblichen Systemkonzepten ein ausreichend geringer Leistungsverbrauch erreichen ( für Solaranlagen z.B. $\leq$ 300 W für (1 + 1)-Verbindungen) ohne nennenswerte Abweichungen von den CCIR-Qualitätsanforderungen für Übertragungssysteme. Problematisch ist es jedoch bei schnellen Digitalsystemen (z.B. 140 MBit/s), die wegen ihrer Empfindlichkeit gegen Schwund adaptive Basisbandentzerrer und Raumdiversity erfordern und zudem auf schnelle Logik mit hohem Leistungsverbrauch angewiesen sind.

Der Erfindung liegt die Aufgabe zugrunde, für ein Nachrichtenübertragungssystem der eingangs beschriebenen Art eine Lösung anzugeben, mit der schnelle Digitalsysteme energiesparend betrieben werden können.

Diese Aufgabe wird gemäß der Erfindung in der Weise gelöst, daß im Empfänger ein Detektor zum schnellen Erkennen von Schwunderscheinungen (z.B. Flachschwund und ZF-Amplitudenverzerrungen) angeordnet ist, aus dessen Signalen entsprechend den Schwunderscheinungen, unter Berücksichtigung der Schnelligkeit der Änderungen, gewichtete Schaltschwellen abgeleitet werden, die Schaltkriterien liefern für die unterbrechungsfreie Anschaltung des Diversityempfängers und ggf. für die Abschaltung des schwundbehafteten Grundempfängers zusammen mit dem zugehörigen Kombinator zur Verminderung von Schwundverzerrungen, und daß die Auswertung der Schaltschwellen und Erzeugung der Schaltkriterien in einem Mikroprozessor erfolgt, dem die Signale des Detektors sowie das Signal einer Empfangsleistungsregelschleife zugeführt werden und der ferner mit einem Taktgenerator und einem Arbeitsprogramm und Daten enthaltenden Speicher verbunden ist.

In vorteilhafter Weiterbildung des Erfindungsgegenstandes ist vorgesehen, daß aus den Signalen des Schwunddetektors Schaltschwellen für die sendeseitige Leistungseinstellung abgeleitet werden derart, daß die vorher reduzierte Sendeleistung des Funkfeldes auf normale Sendeleistung hochgeschaltet wird zur Schwundminderung und daß aus den Signalen des Schwunddetektors Schaltschwellen für eine ZF-Durchschltung über mehrere Funkfelder und deren Aufhebung abgeleitet werden derart, daß das vorher aus Gründen der Betriebsleistungsreduzierung abgeschaltete und im ZF-Bereich durch eine Verzweigung am Eingang und einen ZF-Schalter am Ausgang überbrückte regenerierende und adaptiv schwundentzerrende Modem wieder zugeschaltet wird, um möglicherweise noch zunehmende Verzerrungen des Schwundereignisses durch die volle Entzerrungs- und Regenerationswirkung des Modems zu verhindern.

Der Erfindung liegt dabei die Überlegung zugrunde, daß während des größten Teils der Übertragungszeit auf den Funkfeldern kein Schwund besteht. Während dieser Zeit sind die Geräte überdimensioniert. Durch die erfindungsgemäßen Maßnahmen wird nun erreicht, daß in schwundfreier Zeit die Leistungsaufnahme des Systems in verschiedener Weise einzeln oder kombiniert stark reduziert werden kann ohne Beeinträchtigung der Übertragungsqualität. Durch frühzeitiges Erkennen von kritischem Schwund rechtzeitig vor Auftreten erster Bitfehler, abhängig von der Gewichtigkeit des Schwundereignisses, können Leistungsreduktionen, auch getrennt nach verschiedenen gewichteten Schwellenkriterien behoben werden, ohne daß beim Umschalten Fehler auflaufen.

Weitere vorteilhafte Ausgestaltungen und Weiterbildungen des Erfindungsgegenstandes sind in den Unteransprüchen 4 bis 9 angegeben.

Nachstehend wird die Erfindung anhand eines in der Zeichnung dargestellten Ausführrugnsbeispiels näher erläutert.

Es zeigen:

Figur 1 in einem Blockschaltbild die empfangsseitige Einrichtung zur Schwunderkennung und Ableitung von Regelkriterien und

Figur 2 in einem Blockschaltbild die sende- und empfangsseitigen Einrichtungen eines Nachrichtenübertragungssystems mit Schwundregelung.

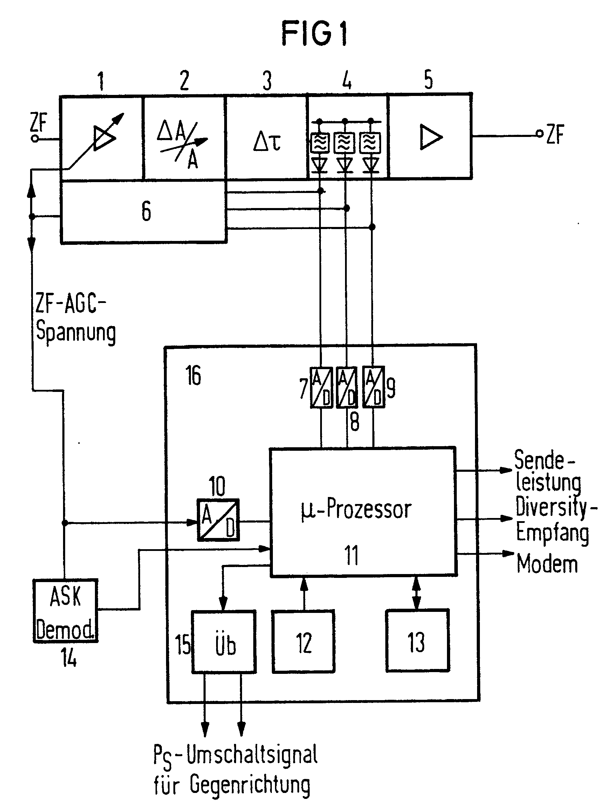

Figur 1 zeigt den ZF-Teil auf der Empfangsseite des Nachrichtenübertragungssystems mit den Einrichtungen zur Schwunderkennung z.B. in der ZF. Der ZF-Teil enthält die Hintereinanderschaltung aus einem ZF-Regelverstärker 1, einem ZF-Amplitudenentzerrer 2, einem Laufzeitentzerrer 3, einem Detektor 4 und einem Ausgangsverstärker 5. Ferner ist eine Auswerteschaltung 6 vorgesehen, über die der Regelverstärker 1 und der Amplitudenentzerrer 2 von Detektorsignalen gesteuert werden.

Der sowieso im ZF-Teil enthaltene Detektor 4 für Schräglagen und quadratische Verzerrungen kann dabei zugleich für die Erkennung von Schwunderscheinungen verwendet werden. Der Detektor 4 steuert normalerweise im System über die Auswerteschaltung 6 den ZF-Amplitudenentzerrer 2 so, daß durch Funkfeldechos bedingte Schräglagen-, parabolische-, kubische- und gegebenenfalls auch Verzerrungen des ZF-Amplitudenfrequenzganges höherer Ordnung durch entsprechende Stellglieder im Amplitudenentzerrer 2 entzerrt werden. Zugleich steuern die Detektorsignale nach entsprechender Auswertung in der Auswerteschaltung 6 den ZF-Regelverstärker 1 zum Ausgleich funkfeldbedingten Flachschwundes.

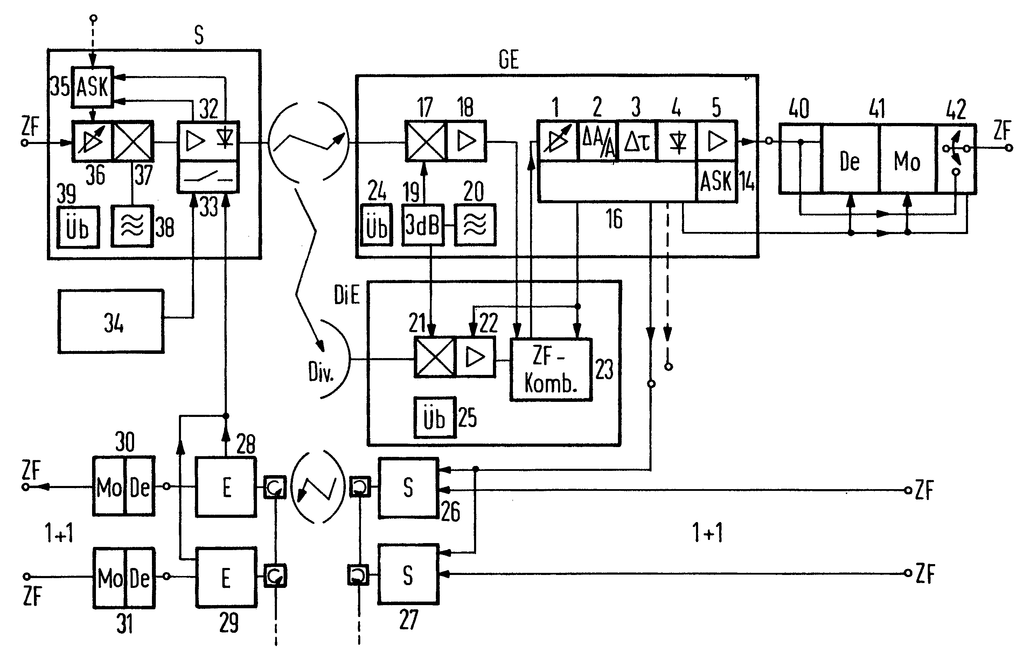

Das ZF-AGC-Signal der Auswerteschaltung 6 für den ZF-Regelverstärker 1, welches zum Beispiel dB-linear die Funkdämpfung angibt, und die Signale des Detektors 4, welche die Signalleistung an mehreren über das Signalspektrum verteilten Frequenzen messen, werden über A/D-Wandler 10 bzw. 7, 8, 9 einem Mikroprozessor 11 zugeführt, der seinen Takt von einem Taktgenerator 12 sowie Arbeitsprogramm und Daten von einem Speicher 13 erhält. Ferner wird dem Mikroprozessor 11 das Signal eines mit der Auswerteschaltung 6 verbundenen ASK-Demodulators 14 zugeführt. Die Einheit aus Mikroprozessor 11, A/D-Wandlern 7...10, Taktgenerator 12, Speicher 13 und einer an den Mikroprozessor 11 angeschalteten Überwachungseinrichtung wird im folgenden als Schwunddetektor 16 bezeichnet. Entsprechend dem, dem Prozessor 11 vorgegebenen Arbeitsprogramm werden Schaltschwellen für Sendeleistung, Diversityempfänger (vgl. Darstellung in Fig. 2) und Modem durch entsprechende Gewichtung der Daten abgeleitet, wobei die Schnelligkeit der Änderungen z.B. mitgewichtet wird. Entsprechend diesem Ergebnis werden Umschaltsignale abgegeben.

Welche Bedeutung die Berücksichtigung der Schnelligkeit der Änderungen hat, soll folgendes Beispiel zeigen: Bei besonders schnellen Änderungen in der automatischen Leistungskontrolle (AGC) und Amplitudenschräglage muß, um Fehler durch das schnelle Schwundereignis zu vermeiden, die Einschaltung von Modulator und Diversityempfänger besonders frühzeitig gestartet werden. Der Grund liegt darin, daß die Umschaltung Zeit erfordert und die Schwundverzerrungen sich während dieser Zeit nicht so verschlechtern dürfen, daß schon Bitfehler vor erfolgter Entzerrerzuschaltung auflaufen. Als Umschaltschwelle würde man in diesem Fall zum Beispiel 2 dB Amplitudenschräglage wählen. Bei langsamen Schwundereignissen könnte die Schwelle im Vergleich vom Prozessor auf 6 dB Schräglage verschoben werden, die vom adaptiven ZF-Amplitudenentzerrer 2 noch fehlerfrei ausgeregelt werden. Geringerer Stationsleistungsbedarf und geringere Schaltunruhe wären die Folge.

Figur 2 zeigt die sende- und empfangsseitigen Einrichtungen eines Nachrichtenübertragungssystems mit den Steuerungs-und Überwachungseinrichtungen für Schwunderscheinungen. Auf der Empfangsseite sind ein Empfänger GE für das Grundsignal und ein Empfänger DiE für das Diversitysignal vorgesehen, die jeweils innerhalb eines Kästchens eingezeichnet sind. Beide Empfänger sind mit einer Antenne verbunden. Der ZF-Teil des Grundempfängers mit dem Schwunddetektor sowie den Regelungs- und Auswerteeinrichtungen für die Schaltschwellen entspricht dabei im wesentlichen dem in Figur 1 dargestellten Schaltungsteil. Diesem vorangeschaltet ist ein Empfangsmischer 17, dem über einen 3 dB-Koppler 19 das Signal eines Oszillators 20 zugeführt wird. Der Oszillator 20 liefert über den 3 dB-Koppler 19 zugleich das Signal an den Empfangsmischer 21 im Zweig des Diversityempfängers DiE. Die Ausgangssignale der Empfangsmischer 17, 21 von Grundempfänger GE und Diversityempfänger DiE werden über jeweils einen Verstärker 18,22 an einen ZF-Kombinator 23 geführt, der ausgangsseitig mit dem Eingang des ZF-Regelverstärkers 1 im ZF-Teil des Grundempfängers GE verbunden ist. Überwachungseinrichtungen im Grundempfänger GE und Diversityempfänger DiE sind mit 24 und 25 bezeichnet. Die vom Schwunddetektor 16 erzeugten Steuersignale bzw. Umschaltsignale werden über Steuerleitungen an die entsprechenden Elemente herangeführt. Eine erste Steuerleitung führt dabei an den ZF-Kombinator 23 und den Verstärker 22 im Diversityempfänger DiE. Hiermit erfolgt die Abschaltung des Diversityempfängers DiE, der nur im Schwundfall zur Signalverbesserung benötigt wird, oder gegebenenfalls des schwundbehafteten Grundempfängers GE zusammen mit dem Kombinator zur Verminderung von Schwundverzerrungen.

Das vom Schwunddetektor 16 generierte Steuersignal zur Rück- und Zuschaltung der Sendeleistung wird über die Gegenrichtung über die Sender 26, 27 der im Ausführungsbeispiel gezeigten (1 + 1)-Ersatzschaltung zur Sendeseite übertragen und dort von den entsprechenden Empfängern 28, 29 der (1 + 1)-Ersatzschaltung auf einen mit dem Sendeverstärker 32 des Sendezweiges S verbundenen Empfänger 33 für Umschaltsignale gegeben, der zugleich mit einem Netzteil 34 verbunden ist und in dem eine verlustfreie Regelung der Betriebsspannung erfolgt und/oder eine entsprechende Einstellung der Arbeitspunkte des Sendeverstärkers veranlaßt wird. Dem Sendeverstärker 32 sind ein mit einem ASK-Modulator 35 verbundener regelbarer Vorverstärker 36 und ein Mischer 37, an den ein Oszillator 38 angeschlossen ist, vorgeschaltet. Eine Überwachungseinrichtung im Sender S ist mit 39 bezeichnet.

Die Rück- oder Zuschaltung der Sendeleistung soll dabei auf der Empfangsseite überwacht werden. Dies erfolgt in einfacher Weise durch eine niederfrequente (z.B. 500 Hz bis 1 KHz) ASK-Modulation der Sendeleistung mittels des ASK-Modulators 35, wobei die Modulation in der niederfrequenten Regelschleife der Sendeleistung aufgeprägt wird. Im ZF-Regelverstärker 1 der Empfangsseite befindet sich bereits eine schnelle Amplitudenregelung unter Einbeziehung der Auswertung 6 (vgl. Figur 1), wobei das ASK-Signal demoduliert und aus der Zwischenfrequenz ausgeregelt und damit entfernt wird. Eine Weitergabe an nachfolgende ZF-durchgeschaltete Funkfelder wird als unterbunden.

Die Rückübertragung findet, wie vorstehend bereits ausgeführt, vorzugsweise auf beiden Rückkanälen einer z.B. (1 + 1)-ersatzgeschalteten Strecke parallelgeschaltet auf Betriebs- und Ersatzkanal statt. Der erste ASK-Impuls schaltet ohne Zeitverzug vorzugsweise beide Sender der Hinrichtung in der Leistung hoch. Ein nachfolgendes Wort könnte dann, etwas verzögert, den nichtbetroffenen Sender in seiner Leistung wieder zurückschalten.

Durch ein ASK-Signal auf dem schwundbetroffenen Sender kann, z.B. auch verzögert, der Empfangsseite für Überwachungszwecke die Ausführung der Sendeleistungshochschaltung quittiert werden. Ein Ausbleiben der Quittierung auf der Empfangsseite kann zu einem Signal an die Überwachung führen und einen Defekt anzeigen.

Dem empfangsseitigen Grundempfänger GE nachgeschaltet sind eine Leitungsverzweigung 40, ein Demodulator/Modulator 41 und ein Schalter 42. Bei entsprechenden Steuersignalen des Schwunddetektors 16 aufgrund von im Mikroprozessor ermittelten Schaltschwellen kann das Modem 41 umgangen werden, d.h. durchgeschaltet werden oder eingeschaltet bleiben. Eine ZF-Durchschaltung kann über mehrere Funkfelder erfolgen. Während der Durchschaltung ist das Modem aus Verlustleistungsgründen abgeschaltet. In jedem Funkfeld oder zumindest in den kritischen Funkfeldern befinden sich jedoch Low-Power-Zwischenstellenmodems, die im Fadingfall hitless zugeschaltet werden.

## Ansprüche

1. Nachrichtenübertragungssystem für elektromagnetische Wellen, bestehend aus einem Sender, in dem das zu übertragende Signal einem Träger aufmoduliert wird, einer Sende- und einer Empfangsantenne mit dazwischenliegendem Funkfeld und einem Empfänger mit zugehörigem Diversityempfänger, in dem das empfangene Signal in einer ZF-Ebene umgesetzt und demoduliert wird, **dadurch gekennzeichnet,** daß im Empfänger ein Detektor zum schnellen Erkennen von Schwunderscheinungen (z.B. Flachschwund und ZF-Amplitudenverzerrungen) angeordnet ist, aus dessen Signalen entsprechend den Schwunderscheinungen, unter Berücksichtigung der Schnelligkeit der Änderungen, gewichtete Schaltschwellen abgeleitet werden, die Schaltkriterien liefern für die unterbrechungsfreie Anschaltung des vorher wegen Leistungsreduzierung abgeschalteten Diversityempfängers und gegebenenfalls für die Abschaltung des schwundbehafteten Grundempfängers zusammen mit dem zugehörigen Kombinator zur Verminderung von Schwundverzerrungen, und daß die Auswertung der Schaltschwellen und Erzeugung der Schaltkriterien in einem Mikroprozessor erfolgt, dem die Signale des Detektors sowie das Signal einer Empfangsleistungsregelschleife zugeführt werden und der ferner mit einem Taktgenerator und einem Arbeitsprogramm und Daten enthaltenden Speicher verbunden ist.

2. Nachrichtenübertragungssystem nach Anspruch 1, **dadurch gekennzeichnet,** daß aus den Signalen des Schwunddetektors Schaltschwellen für die sendeseitige Leistungseinstellung abgeleitet werden derart, daß die vorher reduzierte Sendeleistung eines Funkfeldes auf normale Sendeleistung hochgeschaltet wird zur Schwundminderung.

3. Nachrichtenübertragungssystem nach Anspruch 1 oder 2, **dadurch gekennzeichnet,** daß aus den Signalen des Schwunddetektors Schaltschwellen für eine ZF-Durchschaltung über mehrere Funkfelder und deren Aufhebung abgeleitet werden derart, daß das vorher aus Gründen der Betriebsleistungsreduzierung abgeschaltete und im ZF-Bereich durch eine Verzweigung am Eingang und einen ZF-Schalter am Ausgang überbrückte regenerierende und adaptiv schwundentzerrende Modem wieder zugeschaltet wird, um möglicherweise noch zunehmende Verzerrungen des Schwundereignisses durch die volle Entzerrungs-und Regenerationswirkung des Modems zu vermindern.

4. Nachrichtenübertragungssystem nach einem der Ansprüche 1 bis 3, **dadurch gekennzeichnet**, daß die Schwunddetektion in der ZF-Ebene erfolgt.

5. Nachrichtenübertragungssystem nach einem der Ansprüche 1 bis 4, **dadurch gekennzeichnet**, daß als Detektor zur Erkennung von Schwunderscheinungen der im ZF-Teil des Empfängers enthaltene Detektor für adaptive ZF-Amplitudenentzerrung verwendet wird, dessen für bestimmte Regelungsvorgänge vorgesehene Signale zugleich dem Mikroprozessor zugeführt werden.

6. Nachrichtenübertragungssystem nach Anspruch 2, **dadurch gekennzeichnet**, daß an die Sendeseite übermittelte Schaltbefehle von dieser quittiert werden und diese über den schwundbetroffenen Kanal zurückgemeldete Quittierung empfangsseitig überwacht wird.

7. Nachrichtenübertragungssystem nach Anspruch 6, **dadurch gekennzeichnet**, daß für die Übertragung des Schaltsignals auf die Sendeseite eine ASK-Modulation der Sendeleistung verwendet wird, die z.B. der Regelschleife der Sendeleistung überlagert und auf der Empfangsseite über die AGC-Regelung des Empfängers einerseits demoduliert und andererseits aus der ZF-Ebene wieder entfernt wird.

8. Nachrichtenübertragungssystem nach einem der Ansprüche 1 bis 7, bei dem wenigstens ein Ersatzkanal vorgesehen ist, **dadurch gekennzeichnet**, daß die Rückübertragung der Schaltsignale zur Sendeseite parallelgeschaltet auf dem Betriebs- und Ersatzkanal erfolgt.

## Claims

1. Information transmission system for electromagnetic waves, comprising a transmitter in which the signal to be transmitted is modulated onto a carrier, a transmitting and a receiving antenna with radio path between, and a receiver with associated diversity receiver in which the received signal is converted and demodulated on an IF level, characterised in that arranged in the receiver is a detector for rapid detection of fading phenomena (e.g. flat fade and IF amplitude distortions), from the signals of which, in accordance with the fading phenomena and taking the rapidity of the changes into account, weighted switching thresholds are derived which provide switching criteria for the interruption-free connection of the diversity receiver previously disconnected due to power reduction, and if appropriate for the disconnection of the basic receiver exhibiting fading together with the associated combiner for reducing fade distortions, and in that the evaluation of the switching thresholds and generation of the switching criteria is carried out in a microprocessor, to which the signals of the detector and also the signal of a receiving power control loop are fed, and which is furthermore connected to a clock generator and a memory containing operating program and data.

2. Information transmission system according to Claim 1, characterised in that switching thresholds for the power setting at the transmitting end are derived from the signals of the fade detector in such a way that the previously reduced transmitting power of a radio path is stepped up to normal transmitting power to reduce fading.

3. Information transmission system according to Claim 1 or 2, characterised in that switching thresholds for an IF through connection over a plurality of radio paths and its cancellation are derived from the signals of the fade detector in such a way that the regenerating and adaptively fade-equalising modem, which was previously disconnected for reasons of operating power reduction and was bridged in the IF range by a branch at the input and an IF switch at the output, is reconnected in order to reduce any possible, still increasing distortions of the fading event by means of the full equalising and regenerating effect of the modem.

4. Information transmission system according to one of Claims 1 to 3, characterised in that the fade detection is carried out on the IF level.

5. Information transmission system according to one of Claims 1 to 4, characterised in that the detector for adaptive IF amplitude equalisation contained in the IF section of the receiver is used as a detector for detecting fade phenomena, the signals of which provided for certain control processes are also fed to the microprocessor.

6. Information transmission system according to Claim 2, characterised in that switching commands sent to the transmitting end are acknowledged by the latter and these acknowledgements sent back over the channel affected by fading are monitored at the receiving end.

7. Information transmission system according to Claim 6, characterised in that an ASK modulation of the transmitting power is used for transmitting the switching signal to the transmitting end which, for example, is superimposed on the control loop of the transmitting power and on the one hand is demodulated at the receiving end using the AGC control of the receiver and on the other hand is removed from the IF level again.

8. Information transmission system according to one of Claims 1 to 7, in which at least one standby channel is provided, characterised in that the return transmission of the switching signals to the transmitting end is carried out in parallel on the operating and standby channel.

**Revendications**

1. Système de transmission d'informations pour des ondes électromagnétiques, constitué par un émetteur, dans lequel le signal à transmettre module une porteuse, une antenne d'émission et une antenne de réception, entre lesquelles est situé un champ hertzien, et un récepteur comportant un récepteur en diversité associé, dans lequel le signal reçu est amené dans un plan de fréquence intermédiaire et est démodulé,
caractérisé par le fait que dans le récepteur est disposé un détecteur servant à identifier rapidement des phénomènes d'évanouissement (par exemple évanouissement plat et distorsions d'amplitude à moyenne fréquence), et à partir des signaux duquel sont dérivés des seuils de commutation pondérés en fonction des phénomènes d'évanouissement, en tenant compte de la rapidité des modifications, et fournissant des critères pour le raccordement, sans interruption, du récepteur en diversité antérieurement déconnecté en raison d'une réduction de puissance, et pour la déconnexion du récepteur de base, qui est le siège d'évanouissements, ainsi que le combinateur associé, afin de réduire des distorsions d'évanouissement, et que l'évaluation des seuils de commutation et la production des critères de commutation s'effectuent dans un microprocesseur, auquel sont envoyés les signaux du détecteur ainsi que le signal d'une boucle de régulation de la puissance de réception et qui en outre est relié à un générateur de cadence et à une mémoire contenant un programme de travail et des données.

2. Système de transmission d'informations suivant la revendication 1, caractérisé par le fait que des seuils de commutation pour le réglage de la puissance côté émission sont dérivés des signaux du détecteur d'évanouissements de telle sorte que la puissance d'émission, réduite auparavant, d'un champ hertzien est accrue jusqu'au niveau de la puissance normale d'émission, afin de réduire les évanouissements.

3. Système de transmission d'informations suivant la revendication 1 ou 2, caractérisé par le fait que les seuils de commutation pour une transmission à fréquence intermédiaire au moyen de plusieurs champs hertziens et la suppression de cette transmission sont dérivés des signaux du détecteur d'évanouissements de sorte que le modem régénérateur, qui réalise une suppression adaptative des évanouissements, a été préalablement déconnecté en vue d'une réduction de la puissance de fonctionnement et est shunté, dans la gamme des fréquences intermédiaires, par une dérivation présente à l'entrée et par un interrupteur pour la fréquence intermédiaire installé à la sortie, est à nouveau connecté pour éviter des distorsions, qui éventuellement continuent à augmenter, du phénomène d'évanouissement, grâce à l'action complète de correction des distorsions et de régénération du modem.

4. Système de transmission d'informations suivant l'une des revendications 1 à 3, caractérisé par le fait que la détection des évanouissements s'effectue dans le plan des fréquences intermédiaires.

5. Système de transmission d'informations suivant l'une des revendications 1 à 4, caractérisé par le fait qu'on utilise comme détecteur pour identifier des phénomènes d'évanouissement, le détecteur contenu dans la partie à fréquence intermédiaire du récepteur et utilisé pour éliminer de façon adaptative les distorsions d'amplitude à fréquence intermédiaire et dont les signaux prévus pour certains processus de régulation sont envoyés simultanément au microprocesseur.

6. Système de transmission d'informations suivant la revendication 2, caractérisé par le fait que le côté émission accuse réception d'instructions de commutation qui lui sont envoyées et que cet accusé de réception renvoyé par l'intermédiaire du canal, qui est le siège d'évanouissements, est contrôlé côté réception.

7. Système de transmission d'informations suivant la revendication 6, caractérisé par le fait que pour la transmission du signal de commutation au côté émission, on utilise une modulation ASK de la puissance d'émission, qui est superposée par exemple à la boucle de régulation de la puissance d'émission et, sur le côté réception, est d'une part démodulée et d'autre part à nouveau éliminée du plan des fréquences intermédiaires, au moyen de la régulation à commande automatique de gain.

8. Système de transmission d'informations suivant l'une des revendications 1 à 7, dans lequel il est prévu au moins un canal de remplacement, caractérisé par le fait que la transmission en retour des signaux de commutation au côté émission s'effectue en parallèle dans le canal de service et dans le canal de remplacement.

# FIG 1